# EUROPÄISCHE PATENTSCHRIFT

(11) **EP 3 645 359 B1**
(45) Veröffentlichungstag und Bekanntmachung des Hinweises auf die Patenterteilung: **31.03.2021**
(21) Anmeldenummer: 18703471.5
(22) Anmeldetag: 03.01.2018
(51) Int. Cl.: B60T 17/22, G01B 5/245, G01B 11/27, G01B 7/315, F16D 65/12, G01B 11/02, G01B 7/28, G01B 7/34, G01B 5/00

(54) **VERFAHREN UND VORRICHTUNG ZUR ERMITTLUNG EINER LAGEABWEICHUNG EINER BREMSSCHEIBE**
METHOD AND DEVICE FOR ASCERTAINING A POSITIONAL DEVIATION OF A BRAKE DISC
PROCÉDÉ ET DISPOSITIF DE DÉTERMINATION D'UN DÉSALIGNEMENT D'UN DISQUE DE FREIN

(30) Priorität: 28.06.2017 DE 102017114378
(43) Veröffentlichungstag der Anmeldung: 06.05.2020
(73) Patentinhaber: Ferquest GmbH, 42555 Velbert (DE)
(72) Erfinder: SCHNAASE, René, 42555 Velbers (DE); WEIHRAUCH, Jens, 28844 Weyhe (DE)
(74) Vertreter: Gottfried, Hans-Peter
(86) Internationale Anmeldenummer: PCT/DE2018/100001
(87) Internationale Veröffentlichungsnummer: WO 2019/001605

(56) Entgegenhaltungen:
- WO-A1-99/63353
- DE-A1-102015 014 840
- JP-A- H01 136 011
- US-B1- 7 437 917

## Beschreibung

Die Erfindung betrifft ein Verfahren und eine Vorrichtung zur Ermittlung einer Lageabweichung einer Bremsscheibe gegenüber einem Bremssattelsitz. Die Bremsscheibe stellt einen um eine Rotationsachse rotationsfähigen, flächigen Rotationskörper mit zwei gegenüberliegenden Rotationsflächen dar, wobei die Rotationsflächen parallel zu einer Bezugsfläche, dem Bremssattelsitz, laufen sollen.

Die besondere Herausforderung auf dem Gebiet der Erfindung liegt darin begründet, dass unterschiedliche Form- und Lagetoleranzen der zusammengefügten Bauteile zu einem einheitlichen Fehlerbild beitragen und trotzdem die Ursachen getrennt ermittelt und betrachtet werden sollen.

Ein wichtiger zu ermittelnder Fehler stellt eine Abweichung von der Rechtwinkligkeit zwischen der Rotationsachse der Bremsscheibe und dem Bremssattelsitz dar, der einer zumindest mittleren Abweichung der Parallelität von Bremssattelsitz und Bremsscheibe entspricht. Zur besseren Unterscheidung wird diese Lageabweichung nachfolgend als Achsenrechtwinkligkeit bezeichnet.

Weiterhin kann sich der momentane Winkel zwischen der rotierenden Fläche und der unbeweglichen Bezugsfläche während der Umdrehung ändern, wenn eine Abweichung in der Rechtwinkligkeit zwischen der rotierenden Fläche und der Rotationsachse, somit ein Scheibenschlag, vorliegt.

Ein Fehler im Planlauf kann, neben Toleranzen in der Ebenheit der vermessenen Flachseite, außerdem in der Parallelität der beiden Flachseiten der Bremsscheibe, nachfolgend zur besseren Unterscheidung als Flächenparallelität bezeichnet, zueinander begründet liegen. Abweichungen hierin führen zu einer über den Umfang und an verschiedenen Radien des rotierenden Objekts hinweg veränderlichen Dicke.

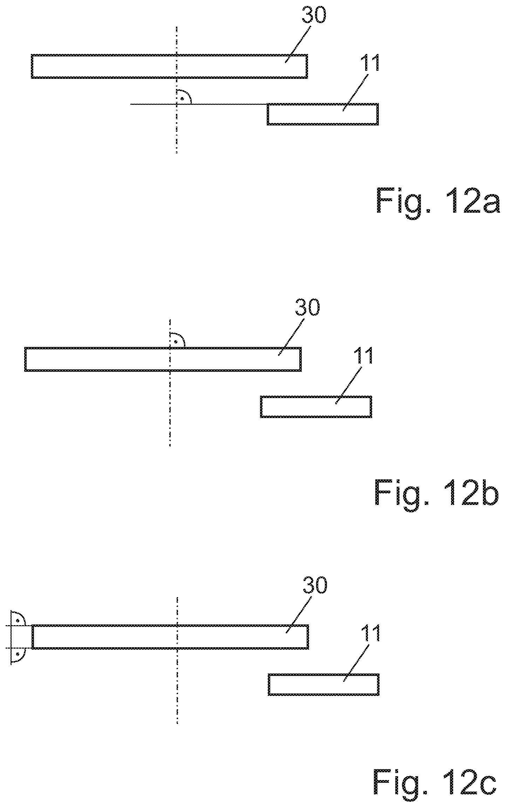

Alle die vorgenannten Lagetoleranzen, Achsenrechtwinkligkeit, Scheibenschlag und Flächenparallelität, stehen in engem Zusammenhang miteinander, siehe zum besseren Verständnis Fig. 12a zur Achsenrechtwinkligkeit, Fig. 12b zum Scheibenschlag und Fig. 12c zur Flächenparallelität, jeweils symbolisiert dargestellt.

Deshalb ist es schwierig, eine der Lagetoleranzen getrennt zu ermitteln, insbesondere nachdem sich im montierten Gesamtsystem unterschiedliche Toleranzen aufsummiert haben. Eine Überschreitung der Toleranzen ist jedoch von erheblichem Nachteil, weil die Stellung der Bremsscheibe gegenüber dem Bremssattel bedeutsam ist. Anderenfalls werden die Kräfte beim Bremsen in den Bremssattel, den Bremssattelsitz und letztlich in die Achse ungleichmäßig abgeleitet und führen in der Folge zu unerwünschten Schwingungen im gesamten System.

Aus dem Stand der Technik sind verschiedene Lösungen bekannt, die sich der Problematik annähern, eine Bremsscheibe zu vermessen. So beschreibt die Druckschrift DE 198 53 078 C1 eine Messeinrichtung und Verfahren zur vereinfachten Prüfung von Bremsscheiben auf Scheibenschlag und Rundlauf. Hierzu wird eine Welle auf einem Lagerbock drehbar gelagert und an der Welle ist eine Aufnahme für die Bremsscheibe vorgesehen. Die so eingespannte Bremsscheibe wird gedreht und währenddessen an beiden Flachseiten und der Zylinderaußenfläche mittels Messeinrichtungen der Scheibenschlag und der Rundlauf geprüft. Diese Prüfung liefert allerdings nur Ergebnisse, die die Bremsscheibe selbst betreffen. Der korrekte Rundlauf oder Scheibenschlag in Bezug auf eine weitere Fläche, beispielsweise einen Bremssattelsitz, ist nicht vorgesehen. Auch werden über Rundlauf und Scheibenschlag hinaus keine weiteren Werte ermittelt.

Auch die Druckschrift DE 10 2011 002 924 A1 befasst sich mit einem Verfahren zum Erkennen eines Bremsscheibenschlags beim Bremsen. Insoweit ist das Verfahren bereits näher an den praktischen Einsatz der Bremsscheibe herangeführt, als dies bei dem zuvor zitierten Verfahren der Fall ist. Während eines Bremsvorgangs wird nämlich mittels eines Sensors der Bremsdruck oder eine davon abhängige Größe gemessen. Das erhaltene Sensorsignal wird danach in Bezug auf darin enthaltene Schwingungen untersucht. Diese Schwingungen geben dann Rückschluss auf einen Bremsscheibenschlag, der jedoch auch nicht aus der Bremsscheibe selbst herrühren muss. Der Fehler kann auch im gesamten System der Lagerung der Bremsscheibe liegen. Damit ist der Bezug auf eine gegenüber dem rotierenden System Bremsscheibe unbewegliche Fläche hergestellt. Allerdings vermag das vorgeschlagene Verfahren keine weiteren Angaben zu ermitteln, sondern ist rein auf eine im Wesentlichen qualitative Aussage zum Scheibenschlag beschränkt. Vor allem aber können die erkannten Probleme nicht eindeutig auf eine mechanische Fehlstellung der Bremsscheibe zurückgeführt werden.

Die Druckschrift US 7 437 917 B1 beschreibt ein Verfahren zur Ermittlung einer Lageabweichung einer Bremsscheibe (30) gegenüber einem Bremssattelsitz (siehe Sp. 2, Z. 63, siehe Fig. 1 mit Sp. 1, Z.1-13). Es ist zwar aus dieser Druckschrift bekannt, Entfernungssensoren für unterschiedliche Radien zur Messung von Flächenabweichungen der Bremsscheibe einzusetzen. Dort werden diese Sensoren jedoch direkt mit dem Bremssattel verbunden und es ist nicht vorgesehen, ein solches Verfahren auch für die Ausmessung einer Winkelabweichung zu benutzen.

Die Druckschrift DE 10 2015014840A1 offenbart einen Einstellmeister der eine in den erforderlichen Toleranzgrenzen maßhaltige, parallel ausgerichtete ebene Normalfläche aufweist (siehe Abs. 19, 23 und Fig. 2). Die Druckschrift offenbart jedoch keine Kalibriereinrichtung, umfassend einen Verbindungssitz und einen Einstellmeister, der eine in den erforderlichen Toleranzgrenzen maßhaltige, parallel zu dem Verbindungssitz ausgerichtete ebene Normalfläche aufweist. Somit sind keine Entfernungssensoren und/oder eine verbundene Auswerteeinrichtung auf die Normalfläche abgleichbar.

Es ist daher Aufgabe der vorliegenden Erfindung, ein Verfahren und eine Vorrichtung zur Ermittlung einer Lageabweichung vorzuschlagen, dabei zumindest eine Achsenrechtwinkligkeit einer Bremsscheibe in Bezug auf einen Bremssattel zu ermitteln.

Die Aufgabe wird gelöst durch ein Verfahren zur Ermittlung einer Lageabweichung einer Bremsscheibe gegenüber einem Bremssattelsitz. Nach der Erfindung wird eine Winkelabweichung von der Parallelen zwischen der Bremsscheibe und dem Bremssattelsitz gemessen, wobei zumindest Achsenrechtwinkligkeit und Scheibenschlag zu der Winkelabweichung beitragen. Die Messung erfolgt, indem eine Vorrichtung zur Ermittlung der Lageabweichung der Bremsscheibe mit dem Bremssattelsitz verbunden wird. Achsenrechtwinkligkeit und Scheibenschlag sind demnach zunächst gemeinsam über eine Winkelabweichung von der der Parallelen zwischen der Bremsscheibe und dem Bremssattelsitz messbar. Die Vorrichtung umfasst hierzu wenigstens zwei in Bezug auf den Bremssattelsitz ortsfeste Entfernungssensoren, die bevorzugt senkrecht zu und in Richtung einer ersten Flachseite der Bremsscheibe messen. Die Entfernungssensoren übertragen an unterschiedlichen Radien der Bremsscheibe, d. h. an Abständen von deren Rotationsachse, gemessene Abstände zwischen der ersten Flachseite der Bremsscheibe und den Entfernungssensoren an eine Auswerteeinrichtung. Aus den gemessenen Abständen wird in der Auswerteinrichtung die Winkelabweichung der Bremsscheibe ermittelt.

Eine bevorzugte Weiterbildung der Erfindung sieht vor, dass die Bremsscheibe während der Messung gedreht wird. Dadurch wird die Änderung der Winkelabweichung in Abhängigkeit des Drehwinkels der Bremsscheibe, damit der Scheibenschlag, ermittelt.

Die Winkelabweichung stellt die momentane bzw. die mittlere Abweichung der rotierenden Fläche, hier der Bremsscheibe, während ihrer Umdrehung zur Stellung der der unbeweglichen Bezugsfläche, hier dem Bremssattelsitz, dar. Die Winkelabweichung ist bezogen auf einen Sollwinkel. Der Sollwinkel beträgt, da Parallelität gefordert ist, 0°.

Die Feststellung der drehwinkelabhängigen Winkelabweichung erfolgt, indem bei der Drehung der Bremsscheibe gemessene Abstände zu der Bremsscheibe zur

Auswertung gelangen. In der Auswerteinrichtung können aus der drehwinkelabhängigen Winkelabweichung, also unter Berücksichtigung des jeweiligen Drehwinkels der Bremsscheibe um die Rotationsachse, die Achsenrechtwinkligkeit aus einer mittlere Winkelabweichung und ein Scheibenschlag aus der Änderung der Winkelabweichung während einer Umdrehung gesondert errechnet und ausgegeben werden.

Indem die Lageabweichung, insbesondere die Achsenrechtwinkligkeit der Bremsscheibe sowie auch der Scheibenschlag gegenüber dem Bremssattelsitz innerhalb vorgegebener Toleranzen bleiben und dies auch effektiv und schnell überprüft werden kann, wird die Funktionssicherheit der betreffenden Anwendungen erheblich verbessert. Im Falle einer Scheibenbremse führen nämlich zu große Abweichungen in der Lage gegenüber dem Bremssattel zu unerwünschten Schwingungen, sobald die Bremse betätigt wird und die Bremsklötze an die Bremsscheibe anlegen. Mit dem erfindungsgemäßen Verfahren kann schon vor dem Einbau der Achsschenkelanordnung oder der Achsanordnung festgestellt werden, ob Toleranzen überschritten worden sind. In einem solchen Fall wird die fehlerhafte Baugruppe nicht erst eingebaut, sondern sofort überarbeitet, bis die vorgesehenen Toleranzen eingehalten werden. Kostspielige Nacharbeiten am bereits fertig gestellten Fahrzeug oder Reklamationen werden vermieden.

Es ist weiterhin vorgesehen, dass wenigstens ein weiterer Entfernungssensor vorgesehen und auf eine zweite Flachseite der Bremsscheibe ausgerichtet ist. Werden dessen Messwerte mit denen eines auf die erste Flachseite gerichteten Sensors in einer Auswerteinrichtung kombiniert, so ist zusätzlich auch die Flächenparallelität der Bremsscheibe ermittelbar und Dickenschwankungen können festgestellt werden.

Eine bevorzugte Anwendung der vorliegenden Erfindung sieht vor, dass als Bremsscheibe eine an eine Achsschenkelanordnung oder einer Achsanordnung montierte Bremsscheibe einer Scheibenbremse vorgesehen ist, an der die Ermittlung von Achsenrechtwinkligkeit, Scheibenschlag und Flächenparallelität der Bremsscheibe gegenüber dem Bremssattelsitz. Die Ebene des Bremssattelsitzes, die demnach eine Bezugsfläche darstellt, wird erfindungsgemäß in den Kipppunkt an der Rotationsachse projiziert.

Demnach ist es vorteilhaft, wenn erste Entfernungssensoren an einer ersten Flachseite und/oder zweite Entfernungssensoren an einer zweiten Flachseite der Bremsscheibe wirkend angeordnet sind. Vorteilhaft ist es, wenn wenigstens drei Entfernungssensoren, davon zumindest zwei zur Wirkung an einer Flachseite der Bremsscheibe, vorgesehen sind, die mit dem Bremssattelsitz starr verbindbar sind und bei der Drehung der Bremsscheibe ein Messergebnis an eine Auswerteeinrichtung liefern können. Die Messung bei Drehung der Bremsscheibe sorgt dafür, dass die maximale Fehlstellung ermittelt werden kann, während bei herkömmlicher Messung im Stand nur die momentan in der jeweiligen Stellung der Bremsscheibe auftretende Winkelabweichung ermittelt werden kann, sofern ein Scheibenschlag vorliegt. Besonders bevorzugt sind drei und zwei, insgesamt fünf Entfernungssensoren.

Eine vorteilhafte Weiterbildung der Erfindung, insbesondere auch der Vorrichtung, sieht vor, dass wenigstens ein Entfernungssensor als Lasermesstaster vorgesehen ist. Alternativ hierzu kommen weitere Methoden der Entfernungsmessung in Betracht, wie z. B. mittels einer Radarstrahlung.

Als besonders vorteilhaft hat es sich jedoch erwiesen, wenn wenigstens ein Entfernungssensor als kapazitiver Näherungssensor vorgesehen ist. Dadurch können beispielsweise auch Bremsscheiben aus Keramik vermessen werden. Zudem ist die Genauigkeit sehr hoch, bis auf 10 nm Abweichung kann gemessen werden. Weiterhin beansprucht ein kapazitiver Näherungssensor nur einen sehr kleinen Bauraum, so dass die gesamte Vorrichtung stark verkleinert werden kann.

Ein weiterer Aspekt der Erfindung betrifft eine Vorrichtung zur Ermittlung einer Lageabweichung einer Bremsscheibe gegenüber einem Bremssattelsitz. Nach der Erfindung sind ein Verbindungsbereich, ausgeführt zur Verbindung mit dem Bremssattelsitz, und wenigstens zwei in Bezug auf den Bremssattelsitz ortsfeste Entfernungssensoren vorgesehen. Die Entfernungssensoren sind an unterschiedlichen Radien bezüglich der Rotationsachse der Bremsscheibe angeordnet und zur Messung eines Abstands zwischen einer ersten Flachseite der Bremsscheibe und den Entfernungssensoren, bevorzugt senkrecht zu dem Bremssattelsitz und in Richtung der ersten Flachseite der Bremsscheibe ausgeführt. Weiterhin ist eine Auswerteeinrichtung vorgesehen und mit den Entfernungssensoren in der Weise verbunden, dass der gemessene Abstand an die Auswerteeinrichtung übertragbar ist und daraus die Winkelabweichung der Bremsscheibe ermittelt werden kann.

Die Auswerteeinrichtung ist so ausgeführt, dass sie bei Einsatz eines dritten Entfernungssensors auf der gegenüberliegenden zweiten Flachseite, zusätzlich eine Flächenparallelität der Bremsscheibe ermitteln kann.

Eine besonders vorteilhafte Ausführungsform sieht vor, dass wenigstens drei Entfernungssensoren auf der ersten Flachseite, z. B. einer Innenseite, und zwei Entfernungssensoren auf der zweiten Flachseite, z. B. Außenseite, der Bremsscheibe wirkend vorgesehen sind. Mit fünf Entfernungssensoren können unterschiedliche Durchmesser von Bremsscheiben auf einer Messeinrichtung geprüft werden, indem die jeweils dem Rand der Bremsscheibe am nächsten liegenden Sensoren zur Messung aktiviert bzw. durch die Auswerteeinrichtung abgefragt werden. Bevorzugt ist ein Abstand von 10 mm vom Rand der Bremsscheibe für den randnächsten Entfernungssensor. Weiterhin hat es sich als günstig erweisen, wenn die Messrichtung senkrecht zu dem Bremssattelsitz verläuft.

Vorteilhafterweise ist wenigstens ein Entfernungssensor als Lasermesstaster ausgeführt oder Radarstrahler ausgeführt. Besondere Vorteile resultieren, wenn wenigstens ein Entfernungssensor als kapazitiver Näherungssensor ausgeführt ist. Dadurch können auch Bremsscheiben aus Keramik vermessen werden. Zudem ist die Genauigkeit sehr hoch, bis auf 10 nm kann gemessen werden. Weiterhin beansprucht ein kapazitiver Näherungssensor nur einen sehr kleinen Bauraum, so dass die gesamte Vorrichtung stark verkleinert werden kann.

Weitere Vorteile ergeben sich, wenn eine Vielzahl von Entfernungssensoren auf der Innenseite und eine Vielzahl von Entfernungssensoren auf der Außenseite der Bremsscheibe wirkend vorgesehen sind.

Es hat sich zudem als vorteilhaft erwiesen, wenn jeweils gesonderte Ausführungsformen für durchgehende Achse, eine Achsanordnung, und Einzelradaufhängung, eine Achsschenkelanordnung, vorgesehen sind. Bei einer durchgehenden Achse, insbesondere einer Hinterachse, wird die gesamte Achsbaugruppe in die erfindungsgemäße Vorrichtung eingelegt, währenddessen bei Einzelradaufhängung die Achsschenkelanordnung jeder Fahrzeugseite gesondert in die Vorrichtung eingelegt und mit dem Gehäuse, das die Entfernungssensoren trägt, verbunden wird. Für jede Fahrzeugseite ist bevorzugt eine gesonderte Vorrichtung bzw. ein gesondertes Gehäuse vorgesehen, für die Achsschenkelanordnung oder die Achsanordnung der rechten oder der linken Seite ist jeweils eine gesonderte Vorrichtung vorgesehen.

Zur Lösung der erfindungsgemäßen Aufgabe trägt auch eine Kalibriereinrichtung bei, die einen Einstellmeister, umfassend als eine in den erforderlichen Toleranzgrenzen maßhaltige, parallel zur Ausrichtung der Bremsscheibe ebene Fläche, aufweist und mit der Vorrichtung, wie zuvor beschrieben, verbindbar ist. Die Entfernungssensoren und/oder die verbundene Auswerteeinrichtung sind dadurch abgleichbar. Ein Normal, ausgebildet als eine maßhaltige Bremsscheibe oder eine veränderbare Einrichtung zur Simulation von Bremsscheiben unterschiedlicher Größe, dient zur Überprüfung des Einstellmeisters und der gesamten Vorrichtung.

Als besonders günstig hat es sich erwiesen, wenn der Einstellmeister aktiv beweglich mit der Vorrichtung, wie zuvor beschrieben, in der Weise verbunden ist, dass er selbsttätig mit seiner Normalfläche in den Messbereich eingeschwenkt und die Vorrichtung kalibriert werden kann. Dies geschieht beispielsweise in regelmäßigen Zeitabständen und/ oder in Abhängigkeit von äußeren Faktoren wie Erschütterungen und Temperaturänderungen. Eine solche automatisierbare Kalibrierfunktion ist insbesondere dann von Bedeutung, wenn die Vorrichtung in der Serienfertigung innerhalb einer weitgehend automatisierten Fertigung zum Einsatz kommt.

Ein Aspekt der Erfindung betrifft daher zudem ein Kalibrierverfahren zur Kalibrierung der erfindungsgemäßen Vorrichtung, wie vorstehend beschrieben, und damit zur Sicherung stets korrekter Messergebnisse.

Ein üblicher, beispielhafter Prüfverlauf gestaltet sich folgendermaßen:
1. Der Bediener setzt die Vorrichtung, ausgeführt als "Messeinheit links", an die Aufnahmefläche des Bremssattels und verschraubt diese.
2. Im Messprogramm wählt der Bediener auf dem Bildschirm "Messung Winkelstellung" an. Das Messprogramm, das in der Auswerteeinrichtung abläuft, fragt die Werte der Lasersensoren ab und berechnet die beiden Winkelstellungen. Optional erfolgt die Ausgabe der Winkel auf dem Bildschirm.
3. Danach wählt der Bediener "Messung Flächenparallelität" an. Der Bediener dreht von Hand die Bremsscheibe um mind. 360 Grad, alternativ ist ein Antrieb vorgesehen. Die Abfrage erfolgt beispielsweise über einen Initiator. Sind 360 Grad erreicht erfolgt eine Anzeige auf dem Bildschirm. Das Messprogramm zeigt die Differenz zwischen dem kleinsten und dem größten Messwert an. Dies erfolgt an zwei Punkten auf der Innenseite und zwei Punkten auf der Außenseite.
4. Der Bediener demontiert die Messeinheit und legt sie in der Parkposition auf dem Wagen ab.

Anschließend wird der Prüfablauf auf der rechten Seite wiederholt.

Anstelle des Einsatzes einer Bremsscheibe mit unbekannten inhärentem Planlauf der beiden Flachseiten bzw. der Flächenparallelität kann es zur Erhöhung der Messgenauigkeit sein, eine Normalbremsscheibe einzusetzen, die verminderte Toleranzen im Planlauf aufweist oder deren drehwinkelabhängigen Maßabweichungen im Planlauf bekannt sind. Die drehwinkelabhängigen Maßabweichungen im Planlauf für jede Flachseite, ggf. auch zusätzlich die Flächenparallelität, sind in der Auswerteeinrichtung hinterlegt und werden bei der Berechnung berücksichtigt.

Alternativ kann jede Bremsscheibe nach der Fertigung ausgemessen und die individuelle Topographie hinterlegt werden. Dann ist es auch nicht erforderlich, eine Marke für die drehwinkelabhängige Messung anzubringen, weil die individuelle Topographie nicht nur zur Identifikation der Bremsscheibe geeignet ist, sondern auch der eindeutigen Zuordnung des jeweiligen Drehwinkels.

Im Übrigen eröffnet die Registrierung der individuellen Topographie auch die Möglichkeit zur Identifikation von Fälschungen, wenn die individuelle Topographie nicht mit den übrigen an der Bremsscheibe angebrachten Daten übereinstimmt.

Bei der Kalibrierung der Vorrichtung zur Ermittlung einer Lageabweichung ist ein beispielhafter Ablauf mit den folgenden Schritten vorgesehen:
1. Der Bediener setzt die Vorrichtung zur Ermittlung einer Lageabweichung einer Bremsscheibe mit ihrem Verbindungsbereich an den Verbindungssitz des Einstellmeisters und verschraubt diese.
2. Im Messprogramm der Auswerteeinrichtung wählt der Bediener auf dem Bildschirm "Kalibrierung" an. Das Messprogramm kalibriert die Entfernungssensoren.
3. Der Bediener demontiert die Messeinheit und legt sie in der Ruheposition ab.

Anhand der Beschreibung von Ausführungsbeispielen und ihrer Darstellung in den zugehörigen Zeichnungen wird die Erfindung nachfolgend näher erläutert. Es zeigen:
Fig. 1: eine schematische Seitenansicht einer Ausführungsform einer erfindungsgemäßen Vorrichtung zur Ermittlung einer Lageabweichung einer Bremsscheibe mit Darstellung der Lage einer um eine Rotationsachse rotationsfähigen Bremsscheibe gegenüber einem Bremssattelsitz;
Fig. 2: eine schematische Frontansicht einer Ausführungsform einer erfindungsgemäßen Vorrichtung zur Ermittlung einer Lageabweichung einer Bremsscheibe;
Fig. 3: eine schematische perspektivische Ansicht einer Ausführungsform einer erfindungsgemäßen Vorrichtung zur Ermittlung einer Lageabweichung einer Bremsscheibe;
Fig. 4: eine schematische Darstellung der Funktion einer erfindungsgemäßen Vorrichtung zur Ermittlung einer Lageabweichung einer Bremsscheibe;
Fig. 5: eine schematische Frontansicht einer Ausführungsform einer erfindungsgemäßen Vorrichtung zur Ermittlung einer Lageabweichung einer Bremsscheibe einschließlich Auswerteeinrichtung und Kalibriereinrichtung;
Figuren 6 und 7: schematische perspektivische Ansichten einer Ausführungsform einer erfindungsgemäßen Vorrichtung zur Ermittlung einer Lageabweichung einer Bremsscheibe beim Einsatz an einer Achsanordnung;
Fig. 8 und 9: eine schematische perspektivische Ansicht einer Ausführungsform einer erfindungsgemäßen Vorrichtung zur Ermittlung einer Lageabweichung einer Bremsscheibe an einer Achsschenkelanordnung bei geschlossener bzw. geöffneter Abdeckung;
Figuren 10 und 11: eine Achsanordnung 36 mit einer Ausführungsform einer erfindungsgemäßen Vorrichtung; und
Figuren 12a bis 12c: schematische Darstellung der Lagetoleranzen im Sinne der vorliegenden Erfindung: Achsenrechtwinkligkeit, Scheibenschlag und Flächenparallelität.

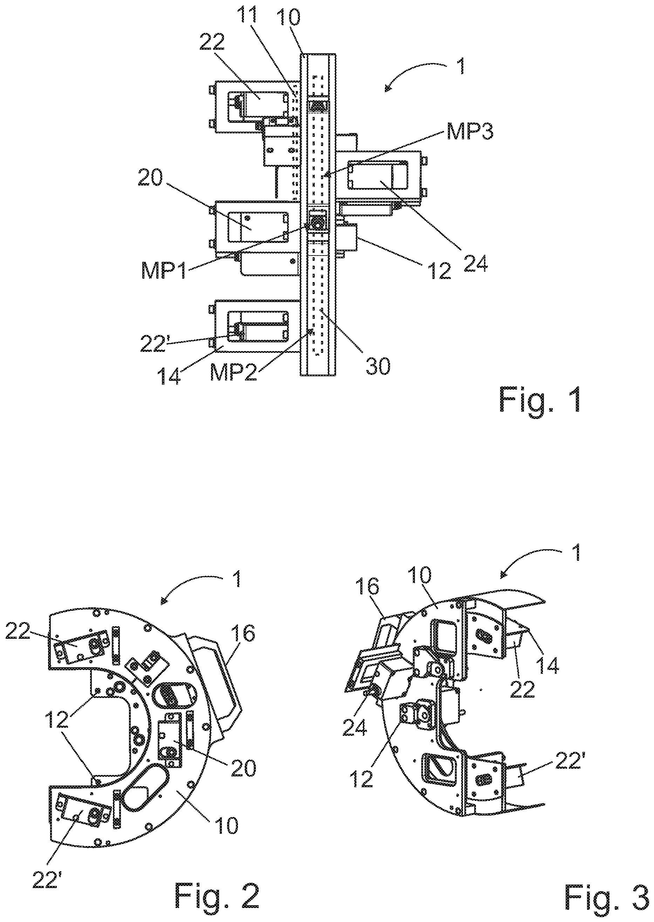

Fig. 1 zeigt eine schematische Seitenansicht einer Ausführungsform einer erfindungsgemäßen Vorrichtung 1 zur Ermittlung einer Lageabweichung einer Bremsscheibe 30. Zugleich ist die Lage der um eine Rotationsachse rotationsfähigen Bremsscheibe 30 gegenüber einer mit dem Gehäuse 10 verbundenen Bezugsfläche, dem Bremssattelsitz 11, und der Bremssattelsitz 11 selbst erkennbar. Beide sind dargestellt als unsichtbare Kanten durch gestrichelte Linien, weil sie durch das Gehäuse 10 verdeckt werden. Die bewegungsfeste, lösbare Verbindung des Gehäuses 10 der Vorrichtung 1 mit dem Bremssattelsitz 11 erfolgt über einen Verbindungsbereich 12, bevorzug durch Verschraubung oder Verspannung durch Spannmittel.

An der Bremsscheibe 30 werden durch die Entfernungssensoren 20, 22 und 24 die Messpunkte MP1, MP2 und MP3 vermessen. Die Entfernungssensoren 20, 22 und 24 sind mittels jeweils einer Sensorhalterung 14 mit dem Gehäuse 10 fest verbunden.

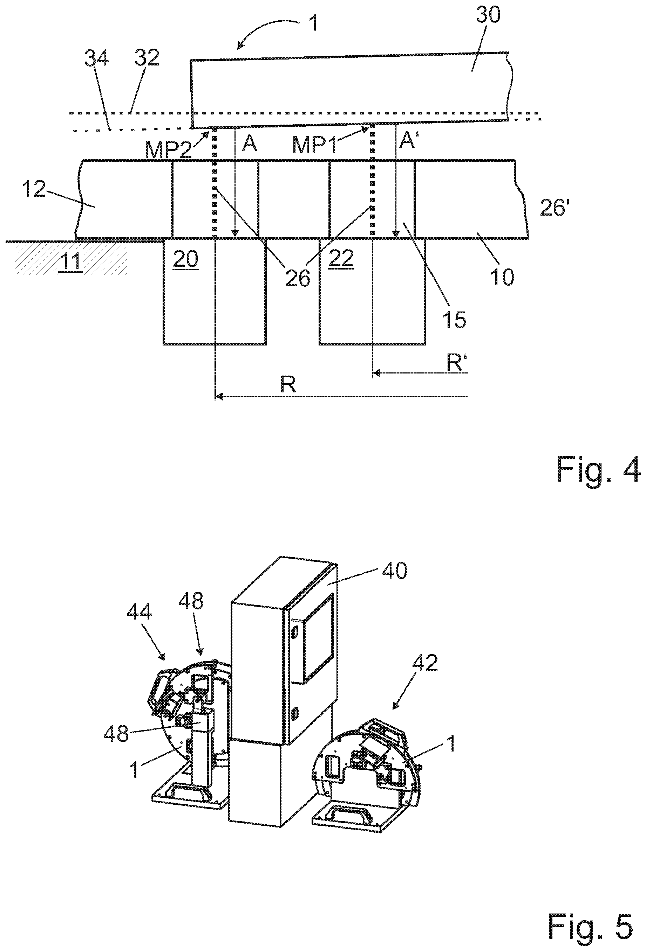

Neben dem Entfernungssensor 22 ist auch ein Entfernungssensor 22' vorgesehen, die beide auf eine erste Flachseite der Bremsscheibe 30 wirken. Welche der beiden Entfernungssensoren jeweils zum Einsatz kommt, hängt vom Durchmesser der Bremsscheibe 30 ab, da die Messung am Messpunkt MP2 in der Nähe des äußeren Umfangs, beispielsweise in 10 mm Abstand vom Rand, erfolgen soll. Die gemessenen Werte werden an eine Auswerteeinrichtung 40 (vergleiche Fig. 5) übertragen.

Fig. 2 zeigt eine schematische Frontansicht einer Ausführungsform einer erfindungsgemäßen Vorrichtung 1 zur Ermittlung einer Lageabweichung einer Bremsscheibe, wobei die Sensoren 20 und 22 bzw. 22' am Gehäuse 10 erkennbar sind. Das Gehäuse 10 ist weiterhin mit einem Handgriff 16 versehen, damit die Vorrichtung 1 leicht an den Montageort verbracht werden kann. Sobald die Vorrichtung 1 auf den Montageort, insbesondere eine Achsschenkelanordnung oder eine Achsanordnung und deren Bremssattelsitz, aufgesetzt ist, erfolgt die Verbindung zwischen dem Bremssattelsitz und der Vorrichtung 1 über wenigstens einen Verbindungsbereich 12. Dabei wird die Ausrichtung des Bremssattelsitzes über den Verbindungsbereich 12 und das Gehäuse 10 zu den Entfernungssensoren 20, 22 und 24 übertragen und deren Ausrichtung zum Bremssattelsitz bestimmt.

Wie in der Darstellung erkennbar ist, weist der Verbindungsbereich 12 zahlreiche Bohrungen auf. Er ist damit zum Einsatz an unterschiedlichen Achsanordnungen oder Achsschenkeln, insbesondere dem jeweils dort vorgesehenen Bremssattelsitz, geeignet.

Fig. 3 zeigt eine schematische perspektivische Ansicht einer Ausführungsform einer erfindungsgemäßen Vorrichtung 1 zur Ermittlung einer Lageabweichung einer Bremsscheibe, wobei die dargestellte Ausführungsform derjenigen aus Fig. 2 entspricht. Auch in der perspektivischen Darstellung ist das Gehäuse 10 mit dem Handgriff 16 zu erkennen, ebenso die Sensorhalterungen 14 mit den Entfernungssensoren 22, 22' und 24. Der Verbindungsbereich 12 dient zur Verbindung mit der Bremssattelsitz 11, vorliegend dem Bremssattelsitz der Achsschenkelanordnung oder der Achsanordnung.

Fig. 4 zeigt eine schematische Darstellung der Funktion einer erfindungsgemäßen Vorrichtung 1 zur Ermittlung einer Lageabweichung einer Bremsscheibe 30. Diese ist nur mit einem Ausschnitt, der nicht ihre Rotationsachse zeigt, dargestellt. Die Bremsscheibe 30 ist gegenüber einer Nulllinie 32, die parallel zum Bremssattelsitz verläuft und eine Normalposition verkörpert, um eine Winkelabweichung 34 geneigt. Um die Größe der Winkelabweichung 34 zu ermitteln und festzustellen, ob ein vorgesehener Toleranzbereich überschritten ist, wird ein Abstand A, A' zu einer ersten Flachseite der Bremsscheibe 30 an zwei verschiedenen Messpunkten MP1 und MP2 durch die Entfernungssensoren 20 und 22 ermittelt. Hierzu dient ein von den Entfernungssensoren 20, 22 bzw. 22' ausgehendes Sensorsignal 26 bzw. 26', das gegen die Bremsscheibe 30 gerichtet ist. Das Sensorsignal 26, 26' erreicht die Bremsscheibe 30 an den Messpunkten MP1 und MP2 durch das Gehäuse 10 hindurch, das hierzu mit Ausnehmungen 15 versehen ist. Das Gehäuse 10 ist mit dem Verbindungsbereich 12 mit dem Bremssattel 11 verbunden. Die Entfernungssensoren 20 und 22 bzw. die Messpunkte MP1 und MP2 sind im unterschiedlichen Abständen angeordnet, nämlich im Radius R, R' von der Rotationsachse der Bremsscheibe 30.

Zur klaren Zuordnung der ermittelten Winkelabweichung 34 zu einer tatsächlichen Winkelabweichung der Rotationsachse von der Senkrechten zum Bremssattelsitz 11 (Nulllinie 32) reicht es nicht aus, die Winkelabweichung nur an zwei einzelnen Messpunkten MP1, MP2 zu ermitteln. Vor diesem Hintergrund wird die Bremsscheibe 30 während der Messung wenigstens einmal, bevorzugt mehrfach um ihre Rotationsachse gedreht. Dabei werden der Auswerteeinrichtung 40 (vergleiche Fig. 5) neben den Messwerten der Entfernungssensoren 20, 22 bzw. 22' auch der, beispielsweise von einem Antrieb der Bremsscheibe 30 oder einem Drehwinkelsensor übermittelte, momentane Drehwinkel im Augenblick der Entfernungsmessung übertragen. Als ein Drehwinkelsensor kann z. B. ein Felgendummi verwendet werden, welcher an der Stelle, wo später im Fahrzeug eine Felge montiert wird, auf die Bremsscheibe montierter wird. Hierzu ist er mit entsprechenden, durch den Drehwinkelsensor auslesbaren Marken auf dem Umfang versehen. Als Marken kommen im einfachsten Fall die fünf Schrauben in Betracht.

Ein Messprogramm, das innerhalb der Auswerteinrichtung 40 abläuft, fragt die Messwerte der jeweiligen Abstände zur Bremsscheibe über die Sensoren 20, 22 bzw. 22' sowie 24, sofern vorhanden, ab und berechnet daraus sowie aus den Umdrehungsdaten bzw. dem Drehwinkel der Bremsscheibe, einem weiteren Messwert, die Winkelabweichungen der Bremsscheibe gegenüber der Bremssattelsitz 11 und den Scheibenschlag, den Winkelversatz der Bremsscheibe 30 gegenüber ihrer Rotationsachse. So kann durch Ermittlung der drehwinkelabhängigen Winkelabweichung 34 ein vollständiges Bild über den Zustand der Bremsscheibe 30 hinsichtlich Achsenrechtwinkligkeit, Scheibenschlag und Flächenparallelität gegenüber dem Bremssattelsitz 11 der Achsschenkelanordnung 38 oder der Achsanordnung 36 erlangt werden.

Um auch Kenntnis über die Flächenparallelität der Bremsscheibe 30 zu erlangen, ist ein hier nicht dargestellter Entfernungssensor 24 auf der gegenüberliegenden Flachseite der Bremsscheibe 30 vorgesehen, der einen Messpunkt MP3 vermisst. Dieser ist beispielsweise unmittelbar gegenüber dem Messpunkt MP2 angeordnet, so dass auch hierbei mittels der Auswerteeinrichtung 40 die Messwerte der Messpunkte MP2 und MP3 in der Weise ausgewertet werden können, dass Abweichungen in der Flächenparallelität, also der Dicke der Bremsscheibe, über den gesamten Umfang zumindest im Bereich der Messpunkte festgestellt werden können. Vorteilhafterweise stehen zwei Entfernungssensoren für den Messpunkt MP2 auch zwei korrespondierende Entfernungssensoren für den Messpunkt MP3 gegenüber. Durch weitere Entfernungssensoren ergibt sich ein noch genaueres Bild der Flächenparallelität.

Fig. 5 zeigt eine schematische Frontansicht einer Ausführungsform einer erfindungsgemäßen Vorrichtung 1 zur Ermittlung einer Lageabweichung einer Bremsscheibe einschließlich Auswerteeinrichtung 40 und Kalibriereinrichtung 44.

Zudem ist eine Ruheposition 42 gezeigt, in der die Vorrichtung 1 sicher abgelegt werden kann, wenn keine Messung durchgeführt wird.

Die Hauptfunktion der Auswerteeinrichtung 40 ist bereits zu den vorangegangenen Figuren beschrieben worden. Zudem übernimmt die Auswerteeinrichtung 40 in einer vorteilhaften Ausführungsform aber auch die Kalibrierung der Vorrichtung 1, die in regelmäßigen Abständen erforderlich ist, um stets ein genaues Messergebnis liefern zu können. Hierzu wird anstelle der Bremsscheibe 30 ein Einstellmeister 46, umfassend eine Normalfläche ohne oder mit bekannter Abweichung von der Nulllinie 32, (vergleiche Fig. 4) eingesetzt und durch die Vorrichtung 1 vermessen. Mittels der gewonnenen Messwerte der Entfernungssensoren 20, 22 bzw. 22' und 24 wird die Vorrichtung 1 kalibriert.

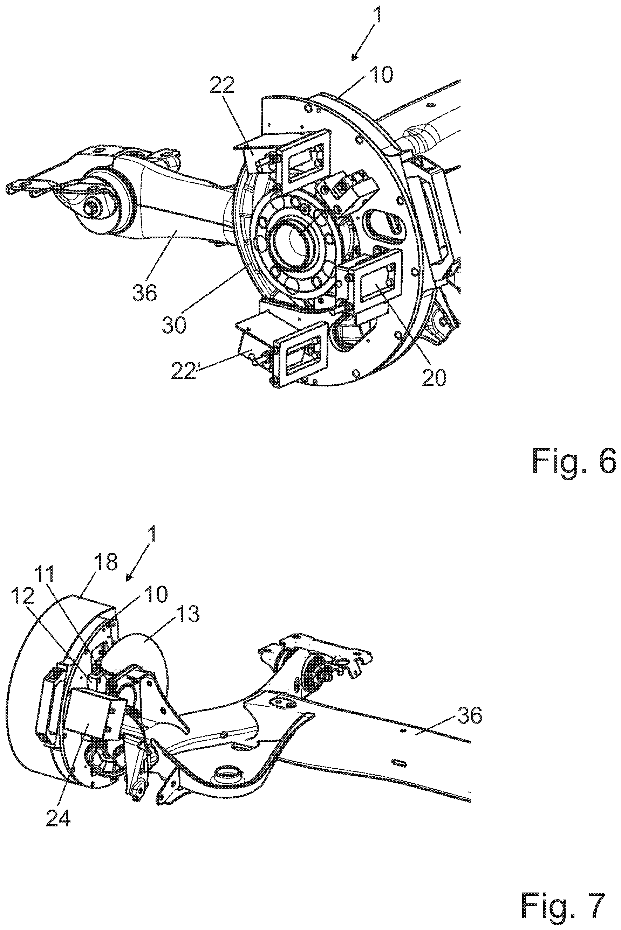

Figuren 6 und 7 zeigt schematische perspektivische Ansichten einer Ausführungsform einer erfindungsgemäßen Vorrichtung 1 zur Ermittlung einer Lageabweichung einer Bremsscheibe beim Einsatz an einer Achsanordnung 36. Mit der Darstellung in Fig. 6 ist bei geöffnetem Gehäuse 10 neben den Sensoren 20, 22 und 22' auch die Achsanordnung 36 zu erkennen. Diese umfasst den hier nicht sichtbaren Bremssattelsitz 11 an die das Gehäuse 10 angeschraubt ist. Die bereits montierte Bremsscheibe, die die Bremsscheibe 30 bildet, wird nun definiert um ihre Achse gedreht und während dessen die Messwerte der Entfernungssensoren 20 und 22 bzw. 22 an die Auswerteeinrichtung übertragen. Nach der dort erfolgten Auswertung sind Achsenrechtwinkligkeit, Scheibenschlag und Flächenparallelität der Bremsscheibe gegenüber dem Bremssattelsitz festgestellt und die ermittelten Werte können auf geeignete Weise gespeichert, ausgegeben oder zur Weiterverarbeitung versandt werden.

Fig. 7 zeigt dieselbe Situation, jedoch bei geschlossener Abdeckung 18. Durch die abweichende Blickrichtung sind neben einer Ankerplatte 13 auch der Bremssattelsitz 11 und der mit ihm verbundene Verbindungsbereich 12 des Gehäuses 10 zu erkennen.

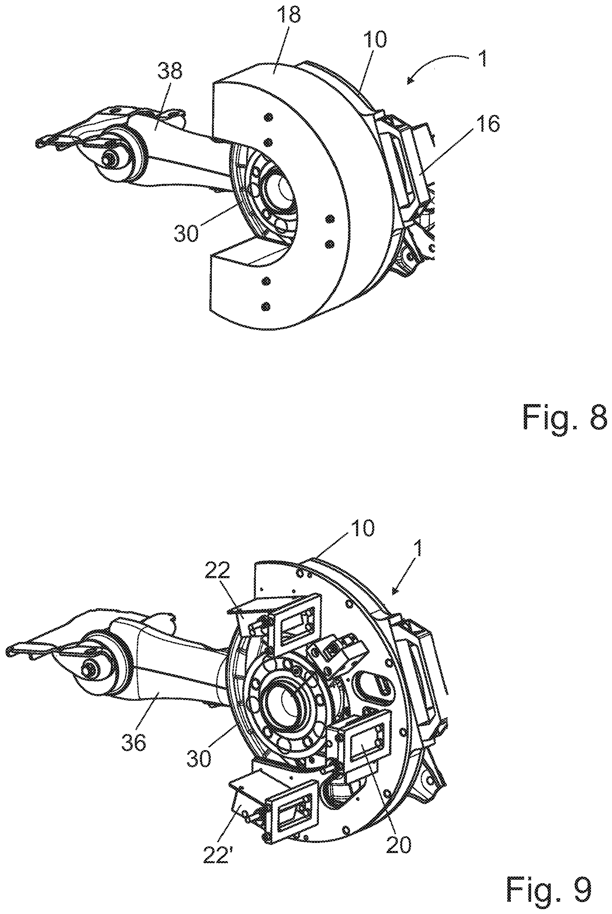

Fig. 8 und 9 zeigt eine schematische perspektivische Ansicht einer Ausführungsform einer erfindungsgemäßen Vorrichtung 1 zur Ermittlung einer Lageabweichung einer Bremsscheibe an einer Achsschenkelanordnung 38 bei geschlossener bzw. geöffneter Abdeckung 18. Auch der Achsschenkelanordnung 38 umfasst einen Bremssattelsitz zur Befestigung des Gehäuses 10 der Vorrichtung 1, nachdem diese mittels des Handgriffs 16 dort aufgesetzt wurde. Nach der Befestigung kann die Vermessung der Bremsscheibe, der Bremsscheibe 30 beginnen. In Fig. 19 zusätzlich die Sensoren 20, 22 und 22' zu erkennen.

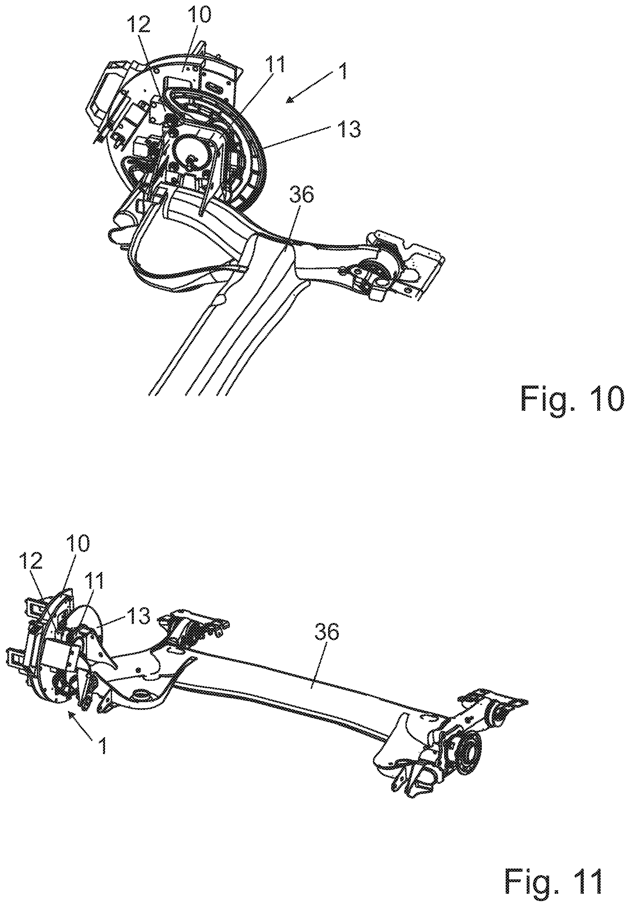

Die Figuren 10 und 11 zeigen eine Achsanordnung 36 mit der Bremsscheibe als Bremsscheibe 30 sowie das aufgesetzte und befestigte Gehäuse 10 der Vorrichtung 1. Erkennbar sind wiederum die Ankerplatte 13, der Bremssattelsitz 11 und der Verbindungsbereich 12.

Die Figuren 12a bis 12c verdeutlichen in einer schematische Darstellung die unterschiedlichen Lagetoleranzen, die im Rahmen der vorliegenden Erfindung ermittelt werden. Fig. 12a zeigt die Achsenrechtwinkligkeit, wobei die Rotationsachse der Bremsscheibe 30 rechtwinklig zu dem (verlängerten) Bremssattelsitz 11 verläuft. Fig. 12b zeigt den Scheibenschlag, d. h. die Rechtwinkligkeit zwischen der Bremsscheibe 30 bzw. deren Flachseiten und ihrer Rotationsachse ist gefordert, Abweichungen führen zum Scheibenschlag. Fig. 12c zeigt die Flächenparallelität der Bremsscheibe 30, beide Flachseiten sind parallel.

### Bezugszeichenliste

- 1: Vorrichtung
- 10: Gehäuse
- 11: Bremssattelsitz
- 12: Verbindungsbereich
- 13: Ankerplatte
- 14: Sensorhalterung
- 15: Ausnehmung
- 16: Handgriff
- 18: Abdeckung
- 20: Entfernungssensor 1
- 22, 22': Entfernungssensor 2
- 24: Entfernungssensor 3
- 26, 26': Sensorsignal
- 30: Bremsscheibe
- 32: Nulllinie
- 34: Winkelabweichung
- 36: Achsanordnung
- 38: Achsschenkelanordnung
- 40: Auswerteeinrichtung
- 42: Ruheposition
- 44: Kalibriereinrichtung
- 46: Einstellmeister
- 48: Verbindungssitz
- A, A': Abstand
- MP1: Messpunkt 1
- MP2: Messpunkt 2
- MP3: Messpunkt 3
- R, R': Radius

## Patentansprüche

1. Verfahren zur Ermittlung einer Lageabweichung einer Bremsscheibe (30) gegenüber einem Bremssattelsitz (11), **dadurch gekennzeichnet, dass** eine Winkelabweichung (34) von der Parallelen zwischen der Bremsscheibe (30) und dem Bremssattelsitz (11) gemessen wird, indem eine Vorrichtung (1) zur Ermittlung der Lageabweichung der Bremsscheibe (30) mit dem Bremssattelsitz (11) verbunden wird, wobei wenigstens zwei in Bezug auf den Bremssattelsitz (11) ortsfeste Entfernungssensoren (20, 22, 22') der Vorrichtung (1) in Richtung einer ersten Flachseite der Bremsscheibe (30) messen, wobei die Entfernungssensoren (20, 22, 22') an unterschiedlichen Radien (R, R') der Bremsscheibe (30) gemessene Abstände (A, A') zwischen der ersten Flachseite der Bremsscheibe (30) und den Entfernungssensoren (20, 22, 22') an eine Auswerteeinrichtung (40) übertragen, aus denen in der Auswerteinrichtung die Winkelabweichung (34) der Bremsscheibe (30) ermittelt wird.

2. Verfahren nach Anspruch 1, wobei die Bremsscheibe (30) während der Messung um ihre Rotationsachse gedreht wird und eine Winkelabweichung (34) in Abhängigkeit des jeweiligen Drehwinkels der Bremsscheibe (30) ermittelt wird durch bei der Drehung der Bremsscheibe (30) gemessene Abstände (A, A') zu der Bremsscheibe (30), wobei in der Auswerteinrichtung (40) aus der drehwinkelabhängigen Winkelabweichung (34) eine Achsenrechtwinkligkeit und ein Scheibenschlag gesondert ermittelt werden.

3. Verfahren nach Anspruch 1 oder 2, wobei wenigstens ein weiterer Entfernungssensor (24) vorgesehen und auf eine zweite Flachseite der Bremsscheibe (30) ausgerichtet ist, so dass eine Flächenparallelität der Bremsscheibe (30) ermittelbar ist.

4. Verfahren nach einem der vorherigen Ansprüche, wobei wenigstens ein Entfernungssensor (20, 22, 22', 24) als Lasermesstaster vorgesehen ist.

5. Verfahren nach einem der vorherigen Ansprüche, wobei wenigstens ein Entfernungssensor (20, 22, 22', 24) als kapazitiver Näherungssensor vorgesehen ist.

6. Vorrichtung zur Ermittlung einer Lageabweichung einer Bremsscheibe (30) gegenüber einem Bremssattelsitz (11), **dadurch gekennzeichnet, dass** ein Verbindungsbereich (12), ausgeführt zur Verbindung mit dem Bremssattelsitz (11), und wenigstens zwei in Bezug auf den Bremssattelsitz (11) ortsfeste Entfernungssensoren (20, 22, 22') vorgesehen sind, wobei die Entfernungssensoren (20, 22, 22') an unterschiedlichen Radien (R, R') bezüglich der Rotationsachse der Bremsscheibe (30) angeordnet und zur Messung eines Abstands (A, A') zwischen einer ersten Flachseite der Bremsscheibe (30) und den Entfernungssensoren (20, 22, 22') in Richtung der ersten Flachseite der Bremsscheibe (30) ausgeführt sind, wobei eine Auswerteeinrichtung (40) vorgesehen und mit den Entfernungssensoren (20, 22, 22') verbunden ist, so dass der gemessene Abstand (A, A') an die Auswerteeinrichtung (40) übertragen und daraus die Winkelabweichung (34) der Bremsscheibe (30) ermittelt werden kann.

7. Vorrichtung nach Anspruch 6, wobei die Bremsscheibe (30) während der Messung gedreht werden und ein Drehwinkels der Bremsscheibe (30) um ihre Rotationsachse ermittelt kann und somit eine drehwinkelabhängige Änderung der Winkelabweichung (34) der Bremsscheibe (30) durch bei der Drehung der Bremsscheibe (30) gemessene Abstände (A, A') zu der Bremsscheibe (30) ermittelbar ist, wobei die Auswerteinrichtung (40) geeignet ist, aus der drehwinkelabhängigen Winkelabweichung (34) eine Achsenrechtwinkligkeit und einen Scheibenschlag gesondert zu ermitteln.

8. Vorrichtung nach Anspruch 7, die wenigstens einen weiteren Entfernungssensor (24) umfasst, der auf eine zweite Flachseite der Bremsscheibe (30) gerichtet ist, die Entfernung zu der zweiten Flachseite misst und aus dessen Messwerten eine Flächenparallelität der Bremsscheibe (30) ermittelt werden kann.

9. Vorrichtung nach Anspruch 7 oder 8, wobei wenigstens drei Entfernungssensoren (20, 22, 22') auf die erste Flachseite und wenigstens zwei Entfernungssensoren (24) auf die zweite Flachseite der Bremsscheibe (30) wirkend vorgesehen sind.

10. Vorrichtung nach einem der Ansprüche 7 bis 9, wobei wenigstens ein Entfernungssensor (20, 22, 22', 24) als Lasermesstaster ausgeführt ist.

11. Vorrichtung nach einem der Ansprüche 7 bis 10, wobei wenigstens ein Entfernungssensor (20, 22, 22', 24) als kapazitiver Näherungssensor ausgeführt ist.

12. Vorrichtung nach einem der Ansprüche 7 bis 11, wobei jeweils gesonderte Ausführungsformen für eine Achsanordnung (36) mit durchgehender Achse und einer Achsschenkelanordnung (38) für Einzelradaufhängung vorgesehen sind.

13. Kalibriereinrichtung (44), umfassend einen Verbindungssitz (48) und einen Einstellmeister (46), der eine in den erforderlichen Toleranzgrenzen maßhaltige, parallel zu dem Verbindungssitz (46) ausgerichtete ebene Normalfläche aufweist, wobei der Verbindungssitz (48) mit der Vorrichtung (1) nach einem der Ansprüche 7 bis 12 verbindbar ist und wobei die Entfernungssensoren (20, 22, 22', 24) und/oder die verbundene Auswerteeinrichtung (40) auf die Normalfläche abgleichbar sind.

14. Kalibriereinrichtung nach Anspruch 13, wobei der Einstellmeister (46) aktiv beweglich mit der Vorrichtung (1) nach einem der Ansprüche 7 bis 12 in der Weise verbunden ist, dass die Normalfläche selbsttätig in den Messbereich der Entfernungssensoren (20, 22, 22', 24) gelangen und die Vorrichtung (1) hiernach kalibriert werden kann.

## Claims

1. A method for ascertaining a positional deviation of a brake disc (30) relative to a caliper seat (11), **characterized in that** an angular deviation (34) from the parallel between the brake disc (30) and the caliper seat (11) is measured **in that** an apparatus (1) for ascertaining the positional deviation of the brake disc (30) is connected to the caliper seat (11), wherein at least two distance sensors (20, 22, 22') of the apparatus (1) that are stationary with respect to the caliper seat (11) take measurements in the direction of a first flat face of the brake disc (30), wherein the distance sensors (20, 22, 22') transmit distances (A, A') between the first flat face of the brake disc (30) and the distance sensors (20, 22, 22') measured at different radii (R, R') of the brake disc (30) to an evaluation device (40), wherein the angular deviation (34) of the brake disc (30) is ascertained in the evaluation device from the distances.

2. The method according to claim 1, wherein the brake disc (30) is rotated about its rotation axis during the measurement, and an angular deviation (34) is ascertained as a function of the respective rotation angle of the brake disc (30) through distances (A, A') from the brake disc (30) measured during the rotation of the brake disc (30), wherein an axial perpendicularity and a disc runout are ascertained separately in the evaluation device (40) based on the rotation angle dependent angular deviation (34).

3. The method according to claim 1 or 2, wherein at least one further distance sensor (24) is provided which is oriented towards a second flat face of the brake disc (30), so that a surface parallelism of the brake disc (30) can be ascertained.

4. The method according to any one of the preceding claims, wherein at least one distance sensor (20, 22, 22', 24) is provided as a laser measuring sensor.

5. The method according to any one of the preceding claims, wherein at least one distance sensor (20, 22, 22', 24) is provided as a capacitive proximity sensor.

6. An apparatus for ascertaining a positional deviation of a brake disc (30) relative to a caliper seat (11), **characterized in that** a connection region (12), configured for connection to the caliper seat (11), and at least two distance sensors (20, 22, 22') which are stationary with respect to the caliper seat (11) are provided, wherein the distance sensors (20, 22, 22') are arranged at different radii (R, R') with respect to the rotation axis of the brake disc (30) and are configured for measuring a distance (A, A') between a first flat face of the brake disc (30) and the distance sensors (20, 22, 22') in the direction of the first flat face of the brake disc (30), wherein an evaluation device (40) is provided, which is connected to the distance sensors (20, 22, 22'), so that the measured distance (A, A') can be transmitted to the evaluation device (40) and the angular deviation (34) of the brake disc (30) can be ascertained from the distance.

7. The apparatus according to claim 6, wherein the brake disc (30) can be rotated during the measurement and a rotation angle of the brake disc (30) about its rotation axis can be ascertained, and thus a rotation angle dependent change in the angular deviation (34) of the brake disc (30) can be ascertained through distances (A, A') from the brake disc (30) measured during the rotation of the brake disc (30), wherein the evaluation device (40) is adapted to separately ascertain an axial perpendicularity and a disc runout based on the rotation angle dependent angular deviation (34).

8. The apparatus according to claim 7, comprising at least one further distance sensor (24) which is oriented towards a second flat face of the brake disc (30) and measures the distance from the second flat face, so that a surface parallelism of the brake disc (30) can be ascertained from the measured values of the further distance sensor.

9. The apparatus according to claim 7 or 8, wherein at least three distance sensors (20, 22, 22') are provided to act on the first flat face and at least two distance sensors (24) are provided to act on the second flat face of the brake disc (30).

10. The apparatus according to any one of claims 7 to 9, wherein at least one distance sensor (20, 22, 22', 24) is configured as a laser measuring sensor.

11. The apparatus according to any one of claims 7 to 10, wherein at least one distance sensor (20, 22, 22', 24) is configured as a capacitive proximity sensor.

12. The apparatus according to any one of claims 7 to 11, wherein separate embodiments are provided for an axle assembly (36) with a continuous axle and a steering knuckle assembly (38) for individual wheel suspension, respectively.

13. A calibrating device (44), comprising a connection seat (48) and a master adjuster (46) which includes a planar standardized surface dimensionally accurate to the required tolerance limits and oriented parallel to the connection seat (48), wherein the connection seat (48) can be connected to the apparatus (1) according to any one of claims 7 to 12, and wherein the distance sensors (20, 22, 22', 24) and/or the connected evaluation device (40) can be adjusted to the standardized surface.

14. The calibrating device according to claim 13, wherein the master adjuster (46) is connected to the apparatus (1) according to any one of claims 7 to 12 in an actively movable manner such that the standardized surface can move into the measuring area of the distance sensors (20, 22, 22', 24) automatically and the apparatus (1) can be calibrated thereafter.

## Revendications

1. Procédé de détermination d'un écart de position d'un disque de frein (30) par rapport à un siège d'étrier de frein (11), **caractérisé en ce qu'**un écart angulaire (34) des parallèles entre le disque de frein (30) et le siège d'étrier de frein (11) est mesuré **en ce qu'**un dispositif (1) est connecté au siège d'étrier de frein (11) pour la détermination de l'écart de position du disque de frein (30), dans lequel au moins deux capteurs d'éloignement fixes (20, 22, 22') par rapport au siège d'étrier de frein (11) du dispositif (1) mesurent en direction d'un premier côté plat du disque de frein (30), dans lequel les capteurs d'éloignement (20, 22, 22') transmettent des distances (A, A') mesurées à différents rayons (R, R') du disque de frein (30) entre le premier côté plat du disque de frein (30) et les capteurs d'éloignement (20, 22, 22') à un dispositif d'évaluation (40), à partir desquelles l'écart angulaire (34) du disque de frein (30) est déterminé dans le dispositif d'évaluation.

2. Procédé selon la revendication 1, dans lequel le disque de frein (30) est tourné autour de son axe de rotation pendant la mesure et un écart angulaire (34) est déterminé en fonction de l'angle de rotation respectif du disque de frein (30) par des distances (A, A') mesurées lors de la rotation du disque de frein (30) par rapport au disque de frein (30), dans lequel une orthogonalité axiale et une excentricité de disques sont déterminées séparément à partir de l'écart angulaire (34) dépendant de l'angle de rotation dans le dispositif d'évaluation (40).

3. Procédé selon la revendication 1 ou 2, dans lequel au moins un autre capteur d'éloignement (24) est prévu et orienté sur un second côté plat du disque de frein (30) de sorte qu'un parallélisme de surfaces du disque de frein (30) peut être déterminé.

4. Procédé selon une des revendications précédentes, dans lequel au moins un capteur d'éloignement (20, 22, 22', 24) est prévu en tant que palpeur de mesure à laser.

5. Procédé selon une des revendications précédentes, dans lequel au moins un capteur d'éloignement (20, 22, 22', 24) est prévu en tant que capteur de proximité capacitif.

6. Dispositif de détermination d'un écart de position d'un disque de frein (30) par rapport à un siège d'étrier de frein (11), **caractérisé en ce qu'**une région de connexion (12), réalisée pour la connexion au siège d'étrier de frein (11), et au moins deux capteurs d'éloignement fixes (20, 22, 22') par rapport au siège d'étrier de frein (11) sont prévus, dans lequel les capteurs d'éloignement (20, 22, 22') sont disposés à différents rayons (R, R') par rapport à l'axe de rotation du disque de frein (30) et réalisés pour la mesure d'une distance (A, A') entre un premier côté plat du disque de frein (30) et les capteurs d'éloignement (20, 22, 22') en direction du premier côté plat du disque de frein (30), dans lequel un dispositif d'évaluation (40) est prévu et connecté aux capteurs d'éloignement (20, 22, 22') de sorte que la distance mesurée (A, A') est transmise au dispositif d'évaluation (40) et l'écart angulaire (34) du disque de frein (30) peut être déterminé à partir de celle-ci.

7. Dispositif selon la revendication 6, dans lequel le disque de frein (3) est tourné pendant la mesure et un angle de rotation du disque de frein (30) autour de son axe de rotation peut être déterminé et une modification dépendant de l'angle de rotation de l'écart angulaire (34) du disque de frein (30) peut ainsi être déterminée par des distances (A, A') mesurées lors de la rotation du disque de frein (30) par rapport au disque de frein (30), dans lequel le dispositif d'évaluation (40) convient à déterminer séparément une orthogonalité axiale et une excentricité de disques à partir de l'écart angulaire (34) dépendant de l'angle de rotation.

8. Dispositif selon la revendication 7, qui comprend au moins un autre capteur d'éloignement (24) qui est dirigé vers un second côté plat du disque de frein (30), mesure l'éloignement par rapport au second côté plat et un parallélisme de surfaces du disque de frein (30) peut être déterminé à partir de ses valeurs de mesure.

9. Dispositif selon la revendication 7 ou 8, dans lequel au moins trois capteurs d'éloignement (20, 22, 22') sont prévus pour agir sur le premier côté plat et au moins deux capteurs d'éloignement (24) sur le second côté plat du disque de frein (30).

10. Dispositif selon une des revendications 7 à 9, dans lequel au moins un capteur d'éloignement (20, 22, 22', 24) est réalisé en tant que palpeur de mesure à laser.

11. Dispositif selon une des revendications 7 à 10, dans lequel au moins un capteur d'éloignement (20, 22, 22', 24) est réalisé en tant que capteur de proximité capacitif.

12. Dispositif selon une des revendications 7 à 11, dans lequel sont prévus à chaque fois des modes de réalisation séparés pour un agencement d'essieux (36) avec essieu continu et un agencement de fusées d'essieu (38) pour suspension unique.

13. Installation d'étalonnage (44), comprenant un siège de connexion (48) et un étalon de réglage (46) qui présente une surface normale plane, de dimensions prescrites dans les limites de tolérance nécessaires, orientée parallèlement au siège de connexion (46), dans laquelle le siège de connexion (48) peut être connecté au dispositif (1) selon une des revendications 7 à 12 et dans laquelle les capteurs d'éloignement (20, 22, 22', 24) et/ou le dispositif d'évaluation connecté (40) peuvent être ajustés sur la surface normale.

14. Installation d'étalonnage selon la revendication 13, dans laquelle l'étalon de réglage (46) est connecté de manière activement mobile au dispositif (1) selon une des revendications 7 à 12 de telle sorte que la surface normale peut parvenir automatiquement dans la région de mesure des capteurs d'éloignement (20, 22, 22', 24) et le dispositif (1) peut être étalonné ci-après.
